(19) Europäisches Patentamt
European Patent Office
Office européen des brevets

(11) **EP 4 401 166 A2**

(12) **EUROPEAN PATENT APPLICATION**

(43) Date of publication:
**17.07.2024 Bulletin 2024/29**

(21) Application number: **23216018.4**

(22) Date of filing: **12.12.2023**

(51) International Patent Classification (IPC):
*H01M 4/36* (2006.01)     *H01M 10/0562* (2010.01)

(52) Cooperative Patent Classification (CPC):
**H01M 4/366; H01M 10/0562**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.01.2023  JP 2023002380**

(71) Applicant: **TOYOTA JIDOSHA KABUSHIKI KAISHA**
**Toyota-shi, Aichi-ken, 471-8571 (JP)**

(72) Inventor: **KUBOTA, Masaru**
**Toyota-shi, 471-8571 (JP)**

(74) Representative: **D Young & Co LLP**
**3 Noble Street**
**London EC2V 7BQ (GB)**

(54) **COMPOSITE PARTICLE, POSITIVE ELECTRODE, AND ALL-SOLID-STATE BATTERY**

(57)     A composite particle (100) comprising: a positive electrode active material particle (110); and a coating film (120) covering at least part of a surface of the positive electrode active material particle (110), wherein the coating film (120) includes a first layer (121) covering at least part of the surface of the positive electrode active material particle (110) and a second layer (122) covering at least part of a surface of the first layer (121), the first layer (121) includes an alkaline oxide including Li and M, the M is at least one of niobium and carbon, and the second layer (122) includes a phosphorus compound.

FIG.1

EP 4 401 166 A2

## Description

CROSS REFERENCE TO RELATED APPLICATIONS

This nonprovisional application is based on Japanese Patent Application No. 2023-002380 filed on January 11, 2023, with the Japan Patent Office, the entire contents of which are hereby incorporated by reference.

BACKGROUND OF THE DISCLOSURE

Field

The present disclosure relates to a composite particle, a positive electrode, and an all-solid-state battery.

Description of the Background Art

Japanese Patent Laying-Open No. 2010-135090 discloses a positive electrode active material for an all-solid-state battery, which comprises a reaction-reducing member (a coating film) formed by a vapor phase process and consisting of a polyanion-structure-containing compound (such as a compound having a $PO_4^{3-}$ orthophosphoric acid framework, for example).

SUMMARY OF THE DISCLOSURE

Sulfide-based all-solid-state batteries (which may be simply called "all-solid-state batteries" hereinafter) have been developed. An all-solid-state battery comprises a sulfide solid electrolyte. When the sulfide solid electrolyte comes into direct contact with positive electrode active material particles, the sulfide solid electrolyte may become degraded. As a result of degradation of the sulfide solid electrolyte (an ion conduction path), battery resistance may increase. To address this problem, forming a coating film on the surface of the positive electrode active material particles has been suggested. The coating film may inhibit direct contact between the positive electrode active material particles and the sulfide solid electrolyte, thereby reducing degradation of the sulfide solid electrolyte. As a result, battery resistance is expected to be reduced.

However, in the case when the coating film is made of a phosphorus compound, during the coating-film forming step and/or while the battery is in operation, neutralization reaction may occur between the phosphorus compound (such as a phosphoric acid compound) which is highly acid and the positive electrode active material which is alkaline, and thereby a high-resistance layer may be formed, leading to an increase in battery resistance (such as initial resistance).

An object of the present disclosure is to reduce battery resistance.

Hereinafter, the technical configuration and effects of the present disclosure will be described. It should be noted that the action mechanism according to the present specification includes presumption. The action mechanism does not limit the technical scope of the present disclosure.

(1) A composite particle comprising:

a positive electrode active material particle; and
a coating film covering at least part of a surface of the positive electrode active material particle, wherein
the coating film includes a first layer covering at least part of the surface of the positive electrode active material particle and a second layer covering at least part of a surface of the first layer,
the first layer includes an alkaline oxide including Li and M, the M is at least one of niobium (Nb) and carbon (C), and
the second layer includes a phosphorus compound.

In the case of the composite particle according to (1) above, the first layer including an alkaline oxide is interposed between the second layer including a phosphorus compound and the positive electrode active material particle. As a result, reaction between the phosphorus compound of the second layer and the positive electrode active material particle is inhibited, and thereby battery resistance is reduced.

Although the first layer is characteristically low in resistance, at the time when the first layer is in contact with a solid electrolyte that surrounds it inside a positive electrode, there is a possibility that the alkaline oxide (a compound including Li and at least one of Nb and C) can degrade during charge/discharge at a high electric potential, leading to an increase in battery resistance (an increase in battery resistance increment). In the case of the composite particle according to (1) above, the second layer is interposed between the first layer and the solid electrolyte, and thereby degradation of the alkaline oxide in the first layer is inhibited. As a result, battery resistance is reduced.

Hence, in a battery comprising the composite particle according to (1) above, battery resistance is expected to be reduced.

(2) The composite particle according to (1), wherein the alkaline oxide is lithium niobate ($LiNbO_3$) or lithium carbonate ($Li_2CO_3$).

(3) The composite particle according to (1) or (2), wherein the phosphorus compound is a phosphoric acid compound.

(4) A positive electrode comprising the composite particle according to any one of (1) to (3) and a sulfide solid electrolyte.

(5) An all-solid-state battery comprising the positive electrode according to (4), a negative electrode, and a separator.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating a composite particle according to the present embodiment.
Fig. 2 is a schematic flowchart illustrating a method of producing a composite particle according to the present embodiment.
Figs. 3A-3C show results of STEM-EELS measurement.
Figs. 4A and 4B show results of XPS Measurement Example 1.
Figs. 5A and 5B show results of XPS Measurement Example 2.

DESCRIPTION OF THE PREFERRED EMBODIMENTS

<Terms and Definitions, etc.>

Expressions such as "comprise", "include", and "have" are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded.

Expressions such as "may" and "can" are not intended to mean "must" (obligation) but rather mean "there is a possibility" (tolerance).

A singular form also includes its plural meaning, unless otherwise specified. For example, "a particle" may mean not only "one particle" but also "a group of particles (powder, particles)".

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

When a compound is represented by a stoichiometric composition formula (such as "$LiCoO_2$", for example), this stoichiometric composition formula is merely a typical example of the compound. The compound may have a non-stoichiometric composition. For example, when lithium cobalt oxide is represented as "$LiCoO_2$", the composition ratio of lithium cobalt oxide is not limited to "Li/Co/O=1/1/2" but Li, Co, and O may be included in any composition ratio, unless otherwise specified. Further, doping with a trace element, substitution, and the like may also be tolerated.

"D50" refers to a particle size in volume-based particle size distribution at which the cumulative frequency accumulated from the small particle size side reaches 50%. D50 may be measured by laser diffraction.

<Composite Particle>

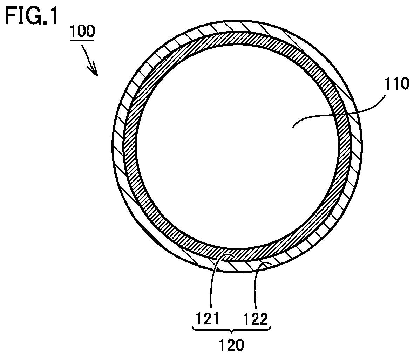

Fig. 1 is a conceptual view illustrating a composite particle according to the present embodiment. A composite particle 100 may also be called "a covered positive electrode active material" and the like, for example. Composite particle 100 includes a positive electrode active material particle 110 and a coating film 120. Composite particle 100 may form an aggregate, for example. More specifically, a single composite particle 100 may include two or more positive electrode active material particles 110. Composite particle 100 may have a D50 from 1 to 50 $\mu$m, or may have a D50 from 1 to 20 $\mu$m, or may have a D50 from 5 to 15 $\mu$m, for example.

<<Coating Film>>

Coating film 120 is a shell for composite particle 100. Coating film 120 covers at least part of the surface of positive electrode active material particle 110. Coating film 120 includes a first layer 121 and a second layer 122. First layer 121 covers at least part of the surface of positive electrode active material particle 110. Second layer 122 covers at least part of the surface of first layer 121.

From the viewpoint of enhancing an effect of the present disclosure, it is preferable that first layer 121 cover substantially the entire surface of the positive electrode active material particle and second layer 122 cover substantially the entire surface of the first layer 121.

However, as long as an effect of the present disclosure is exhibited, part of the surface of the positive electrode active material particle may not be covered with first layer 121 and part of the surface of first layer 121 may not be covered with second layer 122.

For instance, first layer 121 and second layer 122 may completely overlap, or may partly overlap with one another. That is, as long as an effect of the present disclosure is exhibited, coating film 120 may partly include a monolayer structure.

For instance, the covering rate, which is the rate of covering with first layer 121, may be higher than the covering rate with second layer 122. That is, as long as an effect of the present disclosure is exhibited, part of first layer 121 may be exposed on the surface of coating film 120.

For instance, the covering rate with first layer 121 may be less than the covering rate with second layer 122. That is, as long as an effect of the present disclosure is exhibited, part of second layer 122 may be in contact with the surface of positive electrode active material particle 110.

For instance, coating film 120 may include a single first layer 121 and a single second layer 122. For instance, coating film 120 may include a plurality of first layers 121 and a plurality of second layers 122. For instance, first layer(s) 121 and second layer(s) 122 may be stacked alternately on top of one another. The total number of first layer(s) 121 and second layer(s) 122 may be 2 to 10, or may be 2 to 4, for example.

As long as it includes first layer 121 and second layer 122, coating film 120 may further include an additional layer. Coating film 120 may further include a third layer and a fourth layer (not illustrated), for example. The composition of the third layer and that of the fourth layer may be different from that of first layer 121 and that of second layer 122.

<First Layer>

First layer 121 includes an alkaline oxide including Li and M. M is at least one of niobium (Nb) and carbon (C). The alkaline oxide has a pH above 7 when the oxide itself or its precursor is dissolved in water.

The alkaline oxide may be represented by the following formula (3) or the following formula (4), for example.

$$Li_yNb_zO_x \qquad (3)$$

$$Li_yC_zO_x \qquad (4)$$

In the above formulae (3) and (4), each of y, z, and x is any numeral. Each of y, z, and x may be identified by XPS and/or the like, for example. y may satisfy the relationship of $0 \leq y < 2.5$, for example. With y being less than 2.5, initial resistance is expected to be reduced. y may be 1.5 or less, or may be 1 or less, or may be 0.5 or less, for example.

Examples of the alkaline oxide represented by the formula (3) include $LiNbO_3$, $Li_3NbO_4$, $Li_8Nb_2O_9$, $LiNbsOs$, and $LiNbO_2$.

Examples of the alkaline oxide represented by the formula (4) include $Li_2CO_3$. Moreover, the alkaline oxide includes $Li_2CO_3$ as its main phase and may include some $LiHCO_3$ which can be produced from $Li_2CO_3$ in the atmosphere.

<Second Layer>

Second layer 122 includes a phosphorus compound. The phosphorus compound is a compound that includes at least P.

Examples of the phosphorus compound include a phosphoric acid compound. First layer 121 may include a phosphoric acid framework, for example. The presence of a phosphoric acid framework may be checked by TOF-SIMS (Time-of-Flight Secondary Ion Mass Spectrometry). When second layer 122 includes a phosphoric acid framework, fragments of $PO_2^-$, $PO_3^-$, and/or the like are detected in TOF-SIMS of composite particle 100.

Second layer 122 may further include Li. The phosphorus compound may be represented by the following formula (5), for example.

$$Li_yPO_x \qquad (5)$$

In the above formula (5), each of y and x is any numeral. Each of y and x may be identified by XPS and/or the like, for example. y may satisfy the relationship of $0 \leq y < 2.5$, for example. With y being less than 2.5, initial resistance is expected to be reduced. y may be 1.5 or less, or may be 1 or less, or may be 0.5 or less, or may be zero, for example.

Examples of the phosphorus compound represented by the formula (5) include $Li_{0.5}PO_3$ and $PO_x$, $Li_4P_2O_7$, $Li_3PO_4$.

<Film Thickness>

Coating film 120 (the entirety of the film) may have a thickness from 5 to 100 nm, or may have a thickness from 5 to 50 nm, or may have a thickness from 10 to 30 nm, or may have a thickness from 20 to 30 nm, for example.

The thickness of first layer 121 (t1) and the thickness of second layer 122 (t2) may satisfy the relationship of "t1/t2=1/9 to 9/1", or may satisfy the relationship of "t1/t2=3/7 to 7/3", or may satisfy the relationship of "t1/t2=4/6 to 6/4", for example.

The film thickness (the thickness of the coating film) may be measured by the procedure described below. The composite particle is embedded in a resin material to prepare a sample. With the use of an ion milling apparatus, a cross section of the sample is exposed. For example, an ion milling apparatus with the trade name "Arblade (registered trademark) 5000" manufactured by Hitachi High-Technologies (or a similar product) may be used. The cross section of the sample is examined with an SEM (Scanning Electron Microscope). For example, an SEM apparatus with the trade name "SU8030" manufactured by Hitachi High-Technologies (or a similar product) may be used. For each of ten composite particles, the film thickness is measured in twenty fields of view. The arithmetic mean of a total of these 200 measurements of film thickness is regarded as the film thickness.

<Covering Rate>

The covering rate, which is the rate at which the surface of positive electrode active material particle 110 is covered with coating film 120, may be 95% or more, for example. With the covering rate being 95% or more, initial resistance is expected to be reduced. The covering rate may be from 95 to 100%, or may be from 96 to 100%, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation, the covering rate is determined.

$$\theta = \{I_1/(I_0+I_1)\} \times 100$$

$\theta$: Covering rate [%]
$I_0$: Ratio of element attributable to core particle (positive electrode active material particle)
$I_1$: Ratio of element attributable to covering layer (coating film)

<<Positive Electrode Active Material Particle>>

Positive electrode active material particle 110 is the core of composite particle 100. Positive electrode active material particle 110 may be a secondary particle (an aggregate of primary particles). Positive electrode active material particle 110 (secondary particle) may have a D50 from 1 to 50 $\mu$m, or may have a D50 from 1 to 20 $\mu$m, or may have a D50 from 5 to 15 $\mu$m, for example. The primary particles may have a maximum Feret diameter from 0.1 to 3 $\mu$m, for example.

Positive electrode active material particle 110 (positive electrode active material) may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

<Transition Metal Oxide: Space Group R-3m>

The transition metal oxide may have any crystal structure. For example, the transition metal oxide may include a crystal structure that belongs to a space group R-3m and/or the like. For example, a compound represented by the general formula "LiMO$_2$" may have a crystal structure that belongs to a space group R-3m. The transition metal oxide may be represented by the following formula (C-1), for example.

$$\text{Li}_{1-a}\text{Ni}_x\text{M}_{1-x}\text{O}_2 \qquad \text{(C-1)}$$

In the above formula, the relationships of -0.5≤a≤0.5, 0≤x≤1 are satisfied.
M may include, for example, at least one selected from the group consisting of Co, Mn, and Al.
In the above formula (C-1), x may satisfy the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x≤1, for example. a may satisfy the relationship of -0.4≤a≤0.4, -0.3≤a≤0.3, -0.2≤a≤0.2, or -0.1≤a≤0.1, for example.
The transition metal oxide may include, for example, at least one selected from the group consisting of LiCoO$_2$, LiMnO$_2$, LiNi$_{0.9}$Co$_{0.1}$O$_2$, LiNi$_{0.9}$Mn$_{0.1}$O$_2$, and LiNiO$_2$.

<NCM>

The transition metal oxide may be represented by the following formula (C-2), for example. A compound represented by the following formula (C-2) may also be called "NCM".

$$\text{Li}_{1-a}\text{Ni}_x\text{Co}_y\text{Mn}_z\text{O}_2 \qquad \text{(C-2)}$$

In the above formula, the relationships of -0.5≤a≤0.5, 0<x<1, 0<y<1, 0<z<1, x+y+z=1 are satisfied.
In the above formula (C-2), x may satisfy the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x≤1, for example.
In the above formula (C-2), y may satisfy the relationship of 0<y≤0.1, 0.1≤y≤0.2, 0.2≤y≤0.3, 0.3≤y≤0.4, 0.4≤y≤0.5, 0.5≤y≤0.6, 0.6≤y≤0.7, 0.7≤y≤0.8, 0.8≤y≤0.9, or 0.9≤y<1, for example.
In the above formula (C-2), z may satisfy the relationship of 0<z≤0.1, 0.1≤z≤0.2, 0.2≤z≤0.3, 0.3≤z≤0.4, 0.4≤z≤0.5, 0.5≤z≤0.6, 0.6≤z≤0.7, 0.7≤z≤0.8, 0.8≤z≤0.9, or 0.9≤z<1, for example.
NCM may include, for example, at least one selected from the group consisting of LiNi$_{1/3}$Co$_{1/3}$Mn$_{1/3}$O$_2$, LiNi$_{0.4}$Co$_{0.3}$Mn$_{0.3}$O$_2$, LiNi$_{0.3}$Co$_{0.4}$Mn$_{0.3}$O$_2$, LiNi$_{0.3}$Co$_{0.3}$Mn$_{0.4}$O$_2$, LiNi$_{0.5}$Co$_{0.2}$Mn$_{0.3}$O$_2$, LiNi$_{0.5}$Co$_{0.3}$Mn$_{0.2}$O$_2$, LiNi$_{0.5}$Co$_{0.4}$Mn$_{0.1}$O$_2$, LiNi$_{0.5}$Co$_{0.1}$Mn$_{0.4}$O$_2$, LiNi$_{0.6}$Co$_{0.2}$Mn$_{0.2}$O$_2$, LiNi$_{0.6}$Co$_{0.3}$Mn$_{0.1}$O$_2$, LiNi$_{0.6}$Co$_{0.1}$Mn$_{0.3}$O$_2$, LiNi$_{0.7}$Co$_{0.1}$Mn$_{0.2}$O$_2$, LiNi$_{0.7}$Co$_{0.2}$Mn$_{0.1}$O$_2$, LiNi$_{0.8}$Co$_{0.1}$Mn$_{0.1}$O$_2$, and LiNi$_{0.9}$Co$_{0.05}$Mn$_{0.05}$O$_2$.

<NCA>

The transition metal oxide may be represented by the following formula (C-3), for example. A compound represented by the following formula (C-3) may also be called "NCA".

$$\text{Li}_{1-a}\text{Ni}_x\text{Co}_y\text{Al}_z\text{O}_2 \qquad \text{(C-3)}$$

In the above formula, the relationships of -0.5≤a≤0.5, 0<x<1, 0<y<1, 0<z<1, x+y+z=1 are satisfied.
In the above formula (C-3), x may satisfy the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x≤1, for example.
In the above formula (C-3), y may satisfy the relationship of 0<y≤0.1, 0.1≤y≤0.2, 0.2≤y≤0.3, 0.3≤y≤0.4, 0.4≤y≤0.5, 0.5≤y≤0.6, 0.6≤y≤0.7, 0.7≤y≤0.8, 0.8≤y≤0.9, or 0.9≤y<1, for example.

In the above formula (C-3), z may satisfy the relationship of $0<z\leq0.1$, $0.1\leq z\leq0.2$, $0.2\leq z\leq0.3$, $0.3\leq z\leq0.4$, $0.4\leq z\leq0.5$, $0.5\leq z\leq0.6$, $0.6\leq z\leq0.7$, $0.7\leq z\leq0.8$, $0.8\leq z\leq0.9$, or $0.9\leq z\leq1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

<Multi-Component System>

The positive electrode active material may include two or more NCMs and/or the like, for example. The positive electrode active material may include NCM $(0.6\leq x)$ and NCM $(x<0.6)$, for example. "NCM $(0.6\leq x)$" refers to a compound in which x (Ni ratio) in the above formula (C-2) is 0.6 or more. NCM $(0.6\leq x)$ may also be called "a high-nickel material", for example. NCM $(0.6\leq x)$ includes $LiNi_{0.8}Co_{0.1}Mn_{0.1}O_2$ and/or the like, for example. "NCM$(x<0.6)$" refers to a compound in which x (Ni ratio) in the above formula (C-2) is less than 0.6. NCM $(x<0.6)$ includes $LiNi_{1/3}Co_{1/3}Mn_{1/3}O_2$ and/or the like, for example. The mixing ratio (mass ratio) between NCM $(0.6\leq x)$ and NCM $(x<0.6)$ may be "NCM $(0.6\leq x)$/NCM $(x<0.6)$=9/1 to 1/9", or "NCM $(0.6\leq x)$/NCM $(x<0.6)$=9/1 to 4/6", or "NCM $(0.6\leq x)$/NCM $(x<0.6)$=9/1 to 3/7", for example.

The positive electrode active material may include NCA and NCM, for example. The mixing ratio (mass ratio) between NCA and NCM may be "NCA/NCM=9/1 to 1/9", or "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

<Transition Metal Oxide: Space Group C2/m>

The transition metal oxide may include a crystal structure that belongs to a space group C2/m and/or the like, for example. The transition metal oxide may be represented by the following formula (C-4), for example.

$$Li_2MO_3 \qquad (C-4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by, for example, the following formula (C-5):

$$LiMn_{2-x}M_xO_4 \qquad (C-5)$$

where the relationship of $0\leq x\leq2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2$/$LiM_2O_4$=9/1 to 9/1", or "$LiMO_2$/$LiM_2O_4$=9/1 to 5/5", or "$LiMO_2$/$LiM_2O_4$=9/1 to 7/3", for example.

<Polyanion Compound>

The polyanion compound may include a phosphoric acid salt (such as $LiFePO_4$ for example), a silicic acid salt, a boric acid salt, and/or the like, for example. The polyanion compound may be represented by the following formulae (C-6) to (C-9), for example.

$$LiMPO_4 \qquad (C-6)$$

$$Li_{2-x}MPO_4F \qquad (C-7)$$

$$Li_2MSiO_4 \qquad (C-8)$$

LiMBO$_3$     (C-9)

In the above formulae (C-6) to (C-9), M may include, for example, at least one selected from the group consisting of Fe, Mn, Co. In the above formula (C-7), the relationship of $0 \leq x \leq 2$ may be satisfied, for example.

The positive electrode active material may include a mixture of LiMO$_2$ (space group R-3m) and the polyanion compound, for example. The mixing ratio (mass ratio) between LiMO$_2$ (space group R-3m) and the polyanion compound may be "LiMO$_2$/(polyanion compound) =9/1 to 9/1", or "LiMO$_2$/(polyanion compound) =9/1 to 5/5", or "LiMO$_2$/(polyanion compound) =9/1 to 7/3", for example.

<Dopant>

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

<All-Solid-State Battery>

An all-solid-state battery includes a power generation element. The power generation element includes a positive electrode including the above-described composite particle, a separator, and a negative electrode.

The all-solid-state battery may include an exterior package. The exterior package may accommodate the power generation element and an electrolyte. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element, or may accommodate a plurality of power generation elements, for example. The plurality of power generation elements may form a series circuit, or may form a parallel circuit, for example. Inside the exterior package, the plurality of power generation elements may be stacked in the thickness direction of the all-solid-state battery (cell).

[Power Generation Element]

The power generation element includes a positive electrode and a negative electrode. The power generation element may further include a separator. The separator is interposed between the positive electrode and the negative electrode. The power generation element may have any configuration. For example, the power generation element may be a stack-type one. For example, the positive electrode and the negative electrode may be alternately stacked with the separator interposed between the positive electrode and the negative electrode to form the power generation element. For example, the power generation element may be a wound-type one. For example, a positive electrode having a belt-like shape, a separator having a belt-like shape, and a negative electrode having a belt-like shape may be stacked to form a stack. The resulting stack may be wound spirally to form the power generation element. After being wound, the wound power generation element may be shaped into a flat form.

The power generation element may have an anode-free structure, for example. "Anode-free structure" refers to a structure in which no solid negative electrode active material is present before initial charging. It would be obvious that the power generation element may not have an anode-free structure.

<<Positive Electrode>>

The positive electrode is in layered form. For example, the positive electrode may include a positive electrode active material layer and a positive electrode current collector. For example, the positive electrode active material layer may be formed by applying a positive electrode composite material to the surface of the positive electrode current collector. The positive electrode current collector may include an Al foil and/or the like, for example. The positive electrode current collector may have a thickness from 5 to 50 $\mu$m, for example.

The positive electrode active material layer may have a thickness from 10 to 200 $\mu$m, for example. The positive electrode active material layer is closely adhered to the separator. The positive electrode active material layer includes a positive electrode composite material. The positive electrode composite material may include the above-described composite particle (the covered positive electrode active material) and a sulfide solid electrolyte.

The sulfide solid electrolyte may form an ion conduction path inside the positive electrode active material layer. The amount of the sulfide solid electrolyte to be used may be, for example, from 1 to 200 parts by volume, or from 50 to 150 parts by volume, or from 50 to 100 parts by volume, relative to 100 parts by volume of the composite particle (the positive electrode active material). The sulfide solid electrolyte includes sulfur (S). The sulfide solid electrolyte may include Li, P, and S, for example. The sulfide solid electrolyte may further include oxygen (O), silicon (Si), and the like, for example. The sulfide solid electrolyte may further include a halogen and the like, for example. The sulfide solid electrolyte may further include iodine (I), bromine (Br), and the like, for example. The sulfide solid electrolyte may be of glass ceramic type, or may be of argyrodite type, for example. The sulfide solid electrolyte may include, for example, at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-P_2S_5$, and $Li_3PS_4$.

For example, "$LiI-LiBr-Li_3PS_4$" refers to a sulfide solid electrolyte produced by mixing LiI, LiBr, and $Li_3PS_4$ in a freely-selected molar ratio. For example, the sulfide solid electrolyte may be produced by a mechanochemical method. "$Li_2S-P_2S_5$" includes $Li_3PS_4$. $Li_3PS_4$ may be produced by mixing $Li_2S$ and $P_2S_5$ in "$Li_2S/P_2S_5=75/25$ (molar ratio)", for example.

The positive electrode active material layer may further include a conductive material, for example. The conductive material may form an electron conduction path inside the positive electrode active material layer. The amount of the conductive material to be used may be, for example, from 0.1 to 10 parts by mass relative to 100 parts by mass of the composite particle (the positive electrode active material). The conductive material may include, for example, at least one selected from the group consisting of graphite, acetylene black (AB), Ketjenblack (registered trademark), vapor grown carbon fibers (VGCFs), carbon nanotubes (CNTs), and graphene flakes (GFs).

The positive electrode active material layer may further include a binder, for example. The amount of the binder to be used may be, for example, from 0.1 to 10 parts by mass relative to 100 parts by mass of the composite particle (the positive electrode active material). The binder may include any component. The binder may include, for example, at least one selected from the group consisting of polyvinylidene difluoride (PVdF), vinylidene difluoride-hexafluoropropylene copolymer (PVdF-HFP), tetrafluoroethylene (PTFE), CMC, PAA, polyvinyl alcohol (PVA), polyvinylpyrrolidone (PVP), polyoxyethylene alkyl ether, and derivatives of these.

<<Negative Electrode>>

The negative electrode is in layered form. For example, the negative electrode may include a negative electrode active material layer and a negative electrode current collector. For example, the negative electrode active material layer may be formed by applying a negative electrode composite material to the surface of the negative electrode current collector. The negative electrode current collector may include a copper (Cu) foil, a Ni foil, and/or the like, for example. The negative electrode current collector may have a thickness from 5 to 50 $\mu$m, for example.

The negative electrode active material layer may have a thickness from 10 to 200 $\mu$m, for example. The negative electrode active material layer is closely adhered to the separator. The negative electrode active material layer includes a negative electrode composite material. The negative electrode composite material includes a negative electrode active material particle and a sulfide solid electrolyte. The negative electrode composite material may further include a conductive material and a binder. The sulfide solid electrolyte of the negative electrode composite material and that of the positive electrode composite material may be of the same type or may be of different types.

The negative electrode active material particle may include any component. The negative electrode active material particle (the negative electrode active material) may include, for example, at least one selected from the group consisting of natural graphite, artificial graphite, soft carbon, hard carbon, silicon (Si), SiO, Li silicate, Si-based alloy, tin (Sn), SnO, Sn-based alloy, and $Li_4Ti_5O_{12}$.

<Carbon-Based Active Material>

The "graphite" collectively refers to natural graphite and artificial graphite. The graphite may be a mixture of natural graphite and artificial graphite. The mixing ratio (mass ratio) may be "(natural graphite)/(artificial graphite) =1/9 to 9/1", or "(natural graphite)/(artificial graphite) =2/8 to 8/2", or "(natural graphite)/(artificial graphite) =3/7 to 7/3 ", for example.

The graphite may include a dopant. The dopant may include, for example, at least one selected from the group consisting of B, N, P, Li, and Ca. The amount to be added, in molar fraction, may be from 0.01 to 5%, or from 0.1 to 3%, or from 0.1 to 1%, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of $Al(OH)_3$, $AlOOH$, $Al_2O_3$, $WO_3$, $Li_2CO_3$, $LiHCO_3$, and $Li_3PO_4$.

<Alloy-Based Active Material>

SiO may be represented by the following formula (A-1), for example.

$$SiO_x \qquad (A\text{-}1)$$

In the above formula, the relationship of $0<x<2$ is satisfied.

In the above formula (A-1), x may satisfy the relationship of $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. A second negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be, in molar fraction, from 0.01 to 5%, or from 0.1 to 3%, or from 0.1 to 1%, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate, Na silicate, and/or the like may be formed. For example, boron oxide (such as $B_2O_3$, for example), yttrium oxide (such as $Y_2O_3$, for example), and/or the like may be added to SiO.

<Si-C Composite Material>

The second negative electrode active material may include a composite material of the carbon-based active material (such as graphite) and the alloy-based active material (such as Si), for example. A composite material including Si and carbon may also be called "an Si-C composite material". For example, Si microparticles may be dispersed inside carbon particles. For example, Si microparticles may be dispersed inside graphite particles. For example, Li silicate particles may be covered with a carbon material (such as amorphous carbon). The Si-C composite material and graphite may be mixed together for use.

<Multi-Component System>

The second negative electrode active material may include two or more components. The second negative electrode active material may include the carbon-based active material (such as graphite) and the alloy-based active material (such as Si, SiO). The mixing ratio (mass ratio) of the carbon-based active material and the alloy-based active material may be "(carbon-based active material)/(alloy-based active material)=1/9 to 9/1", or "(carbon-based active material)/(alloy-based active material)=2/8 to 8/2", or "(carbon-based active material)/(alloy-based active material)=3/7 to 7/3", or "(carbon-based active material)/(alloy-based active material)=4/6 to 6/4", for example.

<Binder>

The second negative electrode active material may be fixed to a negative electrode current collector 21, a porous body 22, and/or the like by means of a binder, for example. The binder may include any component. The binder may include, for example, at least one selected from the group consisting of polyacrylic acid (PAA), carboxymethylcellulose (CMC), styrene-butadiene rubber (SBR), acrylate butadiene rubber (ABR), polyacrylonitrile (PAN), and derivatives of these.

<Separator>

The separator (a layer) is interposed between the positive electrode and the negative electrode. The separator separates the positive electrode from the negative electrode. The separator includes a sulfide solid electrolyte. The separator may further include a binder. The sulfide solid electrolyte of the separator and that of the positive electrode composite material may be of the same type or may be of different types. The sulfide solid electrolyte of the separator and that of the negative electrode composite material may be of the same type or may be of different types.

For example, the present embodiment may be incorporated into first to third cell configurations. For example, the present embodiment may be combined with the first to third cell configurations. For example, the present embodiment may replace part of the first to third cell configurations. For example, the negative electrode in the first cell configuration may be replaced by the negative electrode according to the present embodiment (negative electrode current collector 21, porous body 22). For example, the negative electrode in the first cell configuration may be used in combination with the negative electrode according to the present embodiment. For example, combining the first to third cell configurations with the present embodiment may improve battery performance.

<Method of Producing Composite Particle>

In the following, an example of a method of producing the composite particle will be described.
The method of producing the composite particle according to the present embodiment comprises:

(a) preparing a positive electrode active material particle (preparation of a positive electrode active material particle); and
(b) forming a coating film (forming a coating film on the surface of the positive electrode active material particle to produce a composite particle), wherein
(b) includes:

(b1) forming the first layer by drying a first coating liquid; and
(b2) forming the second layer by drying a second coating liquid.

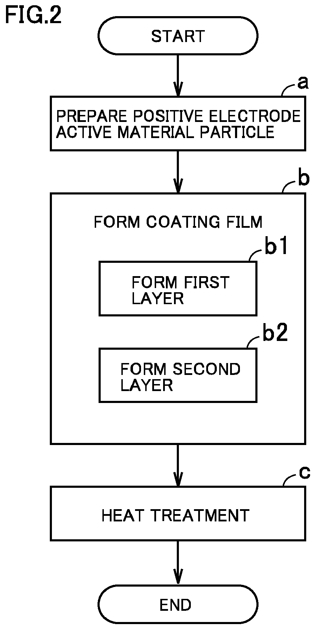

Fig. 2 is a schematic flowchart illustrating a method of producing the composite particle according to the present embodiment. Hereinafter, "the method of producing the composite particle according to the present embodiment" may be simply called "the present production method". The present production method includes "(a) preparing a positive electrode active material particle" and "(b) forming a coating film". The present production method may further include "(c) heat treatment" and the like, for example.

«(a) Preparing Positive Electrode Active Material Particle»

The present production method includes preparing a positive electrode active material particle. The details of the positive electrode active material particle are as described above.

«(b) Forming Coating Film»

The present production method includes forming a coating film on the surface of the positive electrode active material particle to produce a composite particle. The present production method includes "(b 1) forming a first layer" and "(b2) forming a second layer".

<(b1) Forming First Layer>

The present production method includes forming a first layer by drying a first coating liquid. The first coating liquid is prepared. The first coating liquid includes a first solute and a first solvent. The first solute includes a raw material of the first layer.
The amount of the solute may be, for example, from 0.1 to 20 parts by mass, or from 1 to 15 parts by mass, or from 5 to 10 parts by mass, relative to 100 parts by mass of the solvent. As long as it can dissolve the first solute, the first solvent may include any component. The first solvent may include water, alcohol, and/or the like, for example. The first solvent may include ion-exchanged water, ethanol, and/or the like, for example.
The first solute may include a lithium compound and a niobic acid compound, for example.
Examples of the lithium compound include lithium hydroxide, lithium carbonate, lithium nitrate, and the like.
Examples of the niobic acid compound include niobic acid [$Nb_2O_5 \cdot 3H_2O$] and the like.
The first coating liquid and the positive electrode active material particle may be mixed to form a first mixture. For example, the first mixture may be suspension, or may be wet powder. For example, the positive electrode active material particle (powder) may be dispersed in the first coating liquid to form suspension. For example, the first coating liquid may be sprayed into powder to form wet powder. In the present production method, any mixing apparatus, any granulation apparatus, and/or the like may be used.

For example, the first mixture may be dried to form the first layer. That is, the first coating liquid adhered to the surface of the positive electrode active material particle may be dried to produce the first layer. In the present production method, any drying method may be used.

For example, the first coating liquid may be dried by spray drying. More specifically, the suspension is sprayed from a nozzle to form droplets. The droplets include the positive electrode active material particle and the first coating liquid. For example, the droplets may be dried with hot air to form a first-step composite particle (an intermediate product).

The solid content (volume fraction) of the suspension for spray drying may be from 1 to 50%, or may be from 10 to 30%, for example. The diameter of the nozzle may be from 0.1 to 10 mm, or may be from 0.1 to 1 mm, for example. The temperature of the hot air may be from 100 to 200°C, for example.

For example, a tumbling fluidized-bed coating apparatus may be used to form the first mixture and to dry the first coating liquid.

When the first layer is lithium carbonate, instead of carrying out the above-described step (b1), the positive electrode active material particle may be calcined in an atmosphere containing carbon dioxide to form the first layer on the surface of the positive electrode active material particle. During synthesis of the positive electrode active material, usually, a compound such as LiOH is formed on the surface. This LiOH may be subjected to reaction with carbon dioxide to form $Li_2CO_3$ on the surface of the active material.

<(b2) Forming Second Layer>

The present production method includes forming a second layer by drying the second coating liquid. The second coating liquid is prepared. The second coating liquid includes a second solute and a second solvent. The second solute includes a raw material of the second layer.

The amount of the solute may be, for example, from 0.1 to 20 parts by mass, or from 1 to 10 parts by mass, or from 1 to 5 parts by mass, relative to 100 parts by mass of the solvent. As long as it can dissolve the second solute, the second solvent may include any component. The second solvent may include water, alcohol, and/or the like, for example. The second solvent may include ion-exchanged water, ethanol, and/or the like, for example.

The second solute may include a phosphoric acid compound, for example. The second solute may include, for example, at least one selected from the group consisting of anhydrous phosphoric acid ($P_2O_5$), orthophosphoric acid, pyrophosphoric acid, metaphosphoric acid [$(HPO_3)_n$], and polyphosphoric acid. The second solute may include, for example, at least one selected from the group consisting of metaphosphoric acid and polyphosphoric acid. Metaphosphoric acid and polyphosphoric acid may have a longer molecular chain than other phosphoric acid compounds. With the phosphoric acid compound having a long molecular chain, a continuous film (the second layer) is likely to be formed. With the second layer being continuous, the covering rate is expected to be enhanced, for example.

The second solute may further include a lithium compound, for example. The second solute may include lithium hydroxide, lithium carbonate, lithium nitrate, and/or the like, for example.

The second solute may include a boric acid compound, for example. The second solute may include, for example, at least one selected from the group consisting of orthoboric acid, metaboric acid, and tetraboric acid.

The second coating liquid and the first-step composite particle (an intermediate product) may be mixed to form a second mixture. The second mixture may be dried to form the second layer. That is, the second coating liquid adhered to the surface of the first-step composite particle may be dried to produce the second layer. With the production of the second layer, a composite particle (a second-step composite particle, a final product) may be produced. The composite particle corresponds to composite particle 100 in Fig. 1. For example, the second coating liquid may be dried by spray drying, similarly to the case of the first coating liquid.

<<(c) Heat Treatment>>

The present production method may include heat treatment of the first-step composite particle (intermediate product) and/or the composite particle (final product). The heat treatment allows the coating film (each layer) to be fixed. The heat treatment may also be called "calcination". In the present production method, any heat treatment apparatus may be used. The temperature of the heat treatment may be from 150 to 300°C, for example. The duration of the heat treatment may be from 1 to 10 hours, for example. The heat treatment may be carried out in the air, or the heat treatment may be carried out in an inert atmosphere, for example. The heat treatment may be carried out for one of the first-step composite particle and the composite particle, or the heat treatment may be carried out for both the first-step composite particle and the composite particle.

[Examples]

<Composite Particle (Covered Positive Electrode Active Material)>

Composite particles (covered positive electrode active material) of Comparative Examples 1 to 5 and Examples 1 to 6 below were produced.

In each of Comparative Examples 1 to 5, a composite particle comprising a coating film having a monolayer structure (a covered positive electrode active material) was produced. More specifically, coating treatment of the positive electrode active material particle was carried out once.

On the other hand, in each of Examples 1 to 6, a composite particle comprising a coating film having a double-layer structure consisting of a first layer (an inner layer) and a second layer (an outer layer) was produced. More specifically, coating treatment of the positive electrode active material particle was carried out twice. The first layer includes an alkaline oxide including Li and M (at least one of niobium and carbon). The second layer includes a phosphorus compound.

<<Comparative Example 1>>

In 166 parts by mass of ion-exchanged water, 10.8 parts by mass of metaphosphoric acid (manufactured by FUJIFILM Wako Pure Chemical) was dissolved to form a solution. To the resulting solution, lithium hydroxide monohydrate was further dissolved so that a molar ratio "$n_{Li}/n_P$" of 0.45 was achieved, and thereby a coating liquid was prepared. $n_{Li}$ represents the molarity of Li in the coating liquid. $n_P$ represents the molarity of P in the coating liquid.

As positive electrode active material particles, NCM ($LiNi_{1/3}Co_{1/3}Mn_{1/3}O_2$) was prepared. 50 parts by mass of the positive electrode active material particles in powder form was dispersed in 40.3 parts by mass of the coating liquid to prepare a suspension. The resulting suspension was fed to a spray dryer (with the trade name of Mini Spray Dryer B-290, manufactured by BUCHI) to produce composite particles in powder form. The temperature of the air supplied by the spray dryer was 200°C, and the amount of the air supply was 0.45 m$^3$/min. The composite particles were subjected to heat treatment in the air. The temperature of the heat treatment was 200°C. The duration of the heat treatment was 5 hours.

In this manner, composite particles of Comparative Example 1 were produced.

It is conceivable that the coating film of the composite particles of Comparative Example 1 includes $Li_xPO_y$ (each of x and y is any numeral, where, for example, x is 0.5 and y is 3). The target thickness of the coating film is 15 nm.

<<Comparative Example 2>>

In 166 parts by mass of ion-exchanged water, 10.8 parts by mass of metaphosphoric acid (manufactured by FUJIFILM Wako Pure Chemical) was dissolved to form a coating liquid.

The other procedure was carried out in the same manner as in Comparative Example 1 to produce composite particles of Comparative Example 2.

It is conceivable that the coating film of the composite particles of Comparative Example 2 includes $PO_x$ (x is any numeral). The target thickness of the coating film is 15 nm.

<<Comparative Example 3>>

Composite particles of Comparative Example 3 were produced in the same manner as in Comparative Example 1 except that 50 parts by mass of the positive electrode active material particles in powder form was dispersed in 53.7 parts by mass of the coating liquid.

It is conceivable that the coating film of the composite particles of Comparative Example 3 includes $Li_xPO_y$ (each of x and y is any numeral, where, for example, x is 0.5 and y is 3). The target thickness of the coating film is 20 nm.

<<Comparative Example 4>>

Composite particles of Comparative Example 4 were produced in the same manner as in Comparative Example 2 except that 50 parts by mass of the positive electrode active material particles in powder form was dispersed in 53.7 parts by mass of the coating liquid.

It is conceivable that the coating film of the composite particles of Comparative Example 4 includes $PO_x$ (x is any numeral). The target thickness of the coating film is 20 nm.

<<Comparative Example 5>>

In Comparative Example 5, NCA ($LiNi_{0.8}Co_{0.15}Al_{0.05}O_2$) was prepared as positive electrode active material particles.

Composite particles of Comparative Example 5 were produced in the same manner as in Comparative Example 1.

It is conceivable that the coating film of the composite particles of Comparative Example 5 thus obtained includes a phosphoric acid compound ($Li_{0.5}PO_3$). The target thickness of the coating film is 15 nm.

«Example 1»

(First Coating Liquid)

A hydrogen peroxide solution (mass concentration, 30%) in an amount of 870.4 parts by mass was added to a vessel. Then, 1974.8 parts by mass of ion-exchanged water and 44.2 parts by mass of niobic acid [$Nb_2O_5 \cdot 3H_2O$] were added to the vessel. Then, 87.9 parts by mass of an aqueous ammonia solution (mass concentration, 28%) was added to the vessel. The content of the vessel was sufficiently stirred to form a solution. It is conceivable that the resulting solution includes a peroxo complex of Nb. Further, 0.1 parts by mass of lithium hydroxide monohydrate ($LiOH \cdot H_2O$) was dissolved in the solution to prepare a first coating liquid.

(Second Coating Liquid)

In 166 parts by mass of ion-exchanged water, 5.4 parts by mass of metaphosphoric acid (manufactured by FUJIFILM Wako Pure Chemical) was dissolved to form a solution. To the resulting solution, lithium hydroxide monohydrate was further dissolved so that a molar ratio "$n_{Li}/(n_P+n_{E1}+n_{E2})$" of 0.45 was achieved, and thereby a second coating liquid was prepared.

[Forming Coating Film]

(Forming First Layer)

As positive electrode active material particles, NCM ($LiNi_{1/3}Co_{1/3}Mn_{1/3}O_2$) was prepared. 50 parts by mass of the positive electrode active material particles in powder form was dispersed in 53.7 parts by mass of the first coating liquid to prepare a suspension. The resulting suspension was fed to a spray dryer (with the trade name of Mini Spray Dryer B-290, manufactured by BUCHI) to produce first-step composite particles (an intermediate product) in powder form. The temperature of the air supplied by the spray dryer was 200°C, and the amount of the air supply was 0.45 $m^3$/min.

(Forming Second Layer)

The first-step composite particles in powder form in an amount of 50 parts by mass were dispersed in 53.7 parts by mass of the second coating liquid to prepare a suspension. The resulting suspension was fed to a spray dryer (with the trade name of Mini Spray Dryer B-290, manufactured by BUCHI) to produce composite particles (a final product) in powder form. The temperature of the air supplied by the spray dryer was 200°C, and the amount of the air supply was 0.45 $m^3$/min.

(Heat Treatment)

The composite particles were subjected to heat treatment in the air. The temperature of the heat treatment was 200°C. The duration of the heat treatment was 5 hours.

In this manner, composite particles of Example 1 were produced.

It is conceivable that the coating film of the composite particles of Example 1 is composed of a first layer including $LiNbO_3$ (an inner layer) and a second layer including $Li_xPO_y$ (an outer layer) (each of x and y is any numeral, where, for example, x is 0.5 and y is 3). The target thickness of the first layer is 5 nm, and the target thickness of the second layer is 10 nm.

«Example 2»

In 166 parts by mass of ion-exchanged water, 5.4 parts by mass of metaphosphoric acid (manufactured by FUJIFILM Wako Pure Chemical) was dissolved to prepare a second coating liquid.

The other procedure was carried out in the same manner as in Example 1 to produce composite particles of Example 2.

It is conceivable that the coating film of the composite particles of Example 2 is composed of a first layer including $LiNbO_3$ and a second layer including $PO_x$ (x is any numeral). The target thickness of the first layer is 5 nm, and the target thickness of the second layer is 10 nm.

«Example 3»

In 100 parts by mass of ion-exchanged water, 0.5 parts by mass of lithium carbonate (manufactured by FUJIFILM Wako Pure Chemical) was dissolved to prepare a first coating liquid.

In forming a first layer, 60 parts by mass of the positive electrode active material particles in powder form was dispersed in 30.5 parts by mass of the coating liquid to prepare a suspension.

The other procedure was carried out in the same manner as in Example 1 to produce composite particles of Example 3.

It is conceivable that the coating film of the composite particles of Example 3 is composed of a first layer including $Li_2CO_3$ and a second layer including $Li_xPO_y$ (each of x and y is any numeral, where, for example, x is 0.5 and y is 3). The target thickness of the first layer is 5 nm, and the target thickness of the second layer is 10 nm.

«Example 4»

A hydrogen peroxide solution (mass concentration, 30%) in an amount of 870.4 parts by mass was added to a vessel. Then, 987.4 parts by mass of ion-exchanged water and 44.2 parts by mass of niobic acid $[Nb_2O_5 \cdot 3H_2O]$ were added to the vessel. Then, 87.9 parts by mass of an aqueous ammonia solution (mass concentration, 28%) was added to the vessel. The content of the vessel was sufficiently stirred to form a solution. It is conceivable that the resulting solution includes a peroxo complex of Nb. Further, 0.1 parts by mass of lithium hydroxide monohydrate ($LiOH \cdot H_2O$) was dissolved in the solution to prepare a first coating liquid.

The other procedure was carried out in the same manner as in Example 2 to produce composite particles of Example 4.

It is conceivable that the coating film of the composite particles of Example 4 is composed of a first layer including $LiNbO_3$ and a second layer including $PO_x$ (x is any numeral). The target thickness of the first layer is 10 nm, and the target thickness of the second layer is 10 nm.

«Example 5»

In 100 parts by mass of ion-exchanged water, 1.0 part by mass of lithium carbonate (manufactured by FUJIFILM Wako Pure Chemical) was dissolved to prepare a first coating liquid.

The other procedure was carried out in the same manner as in Example 3 to produce composite particles of Example 5.

It is conceivable that the coating film of the composite particles of Example 5 is composed of a first layer including $Li_2CO_3$ and a second layer including $Li_xPO_y$ (each of x and y is any numeral, where, for example, x is 0.5 and y is 3). The target thickness of the first layer is 10 nm, and the target thickness of the second layer is 10 nm.

«Example 6»

In Example 6, NCA ($LiNi_{0.8}Co_{0.15}Al_{0.05}O_2$) was prepared as positive electrode active material particles.

The other procedure was carried out in the same manner as in Example 3 to produce composite particles of Example 6.

It is conceivable that the coating film of the composite particles of Example 6 is composed of a first layer including $LiNbO_3$ (an inner layer) and a second layer including $Li_xPO_y$ (an outer layer) (each of x and y is any numeral, where, for example, x is 0.5 and y is 3). The target thickness of the first layer is 5 nm, and the target thickness of the second layer is 10 nm.

<All-Solid-State Battery>

The below materials were prepared.

Sulfide solid electrolyte: $10LiI-15LiBr-75Li_3PS_4$

Conductive material: VGCF
Binder: SBR
Dispersion medium: heptane
Positive electrode current collector: Al foil

The composite particles of Examples and Comparative Examples, the sulfide solid electrolyte, the conductive material, the binder, and the dispersion medium were mixed to prepare a positive electrode slurry. The mixing ratio between the composite particles and the sulfide solid electrolyte was "(composite particles)/(sulfide solid electrolyte)=6/4 (volume ratio)". The amount of the conductive material to be used was 3 parts by mass relative to 100 parts by mass of the composite particles. The amount of the binder to be used was 3 parts by mass relative to 100 parts by mass of the composite particles. The positive electrode slurry was sufficiently stirred with the use of an ultrasonic homogenizer. The positive electrode slurry was applied to the surface of the positive electrode current collector to form a coating. The coating was dried on a hot plate at 100°C for 30 minutes. In this manner, a positive electrode raw sheet was produced. From the resulting positive electrode raw sheet, a disk-shaped positive electrode was cut out. The area of the positive electrode was 1 cm$^2$.

A negative electrode and a separator were prepared. Negative electrode active material particles were graphite. Between the positive electrode, the separator, and the negative electrode, the samet type of sulfide solid electrolyte was used. Inside a tubular jig, the positive electrode, the separator, and the negative electrode were stacked in this order to form a stack. The resulting stack was pressed to form a power generation element. A terminal was connected to the power generation element to produce an all-solid-state battery.

<Evaluation>

(Measurement of Battery Resistance)

Battery resistance (initial resistance) of the all-solid-state battery was measured. Results of the measurement of battery resistance are shown in Table 1.

[Table 1]

| | Positive electrode active material | First layer | | Second layer | | Battery resistance [$\Omega$] |
|---|---|---|---|---|---|---|
| | | Alkaline oxide | Target thickness [nm] | Phosphorus compound | Target thickness [nm] | |
| Ex. 1 | NCM | LiNbO$_3$ | 5 | Li$_{0.5}$PO$_3$ | 10 | 9 |
| Ex. 2 | NCM | LiNbO$_3$ | 5 | POx | 10 | 9 |
| Ex. 3 | NCM | Li$_2$CO$_3$ | 5 | Li$_{0.5}$PO$_3$ | 10 | 11 |
| Ex. 4 | NCM | LiNbO$_3$ | 10 | POx | 10 | 10 |
| Ex. 5 | NCM | Li$_2$CO$_3$ | 10 | Li$_{0.5}$PO$_3$ | 10 | 10 |
| Ex. 6 | NCA | Li$_2$CO$_3$ | 5 | Li$_{0.5}$PO$_3$ | 10 | 11 |
| Comp. Ex. 1 | NCM | - | | Li$_{0.5}$PO$_3$ | 15 | 14 |
| Comp. Ex. 2 | NCM | - | | POx | 15 | 14 |
| Comp. Ex. 3 | NCM | - | | Li$_{0.5}$PO$_3$ | 20 | 15 |
| Comp. Ex. 4 | NCM | | | POx | 20 | 14 |
| Comp. Ex. 5 | NCA | - | | Li$_{0.5}$PO$_3$ | 15 | 13 |

The results shown in Table 1 indicate that as compared to Comparative Examples where the coating film has a monolayer structure consisting solely of a phosphorus compound layer (second layer), in Examples where the coating film has a multilayer structure including an alkaline oxide layer (first layer) and a phosphorus compound layer (second layer), battery resistance is clearly low.

Usually, when the coating film is changed from a monolayer structure to a multilayer structure for the purpose of enhancing the durability of the coating film, the resistance of the coating film increases. However, the overall resistance of the composite particles of Examples with a double-layer structure was found decreased, which was an unexpected result.

<Structure Analysis of Coating Film of Composite Particles>

(1) STEM-EELS Measurement of Positive Electrode

To check the presence of a double-layer structure of the coating film of the composite particles of Example 1, analysis was carried out in the manner described below.

The positive electrode of the battery produced by using the composite particles of Example 1 was made into a thin film and a cross section of it was exposed while being cooled at -90°C, with the use of a focused ion beam (FIB) apparatus (manufactured by Hitachi High-Tech, NB5000).

The sample with an exposed cross section was transferred to a scanning transmission electron microscope (STEM) apparatus (manufactured by Hitachi High-Tech, HD-2700) with the use of an air protection holder, and elemental analysis was carried out with the use of an electron energy loss spectroscopy (EELS) apparatus (manufactured by AMETEK, GATAN Enfinium).

EELS analysis conditions were as follows:

·EELS mapping data was acquired at 3 nm step, $47 \times 21$ pixel, $141 \times 63$ nm region.
·From the mapping data, EELS line data integrated in the x direction was extracted.
·After background removal, the spectra were displayed in duplication in two ranges.

  30 to 150 eV: Nb-M2,3 Mn-M2.3 Co-M2,3 Li-K Ni-M2,3
  100 to 400 eV: P-L2,3 S-L2,3 B-K Nb-M4,5 S-L1

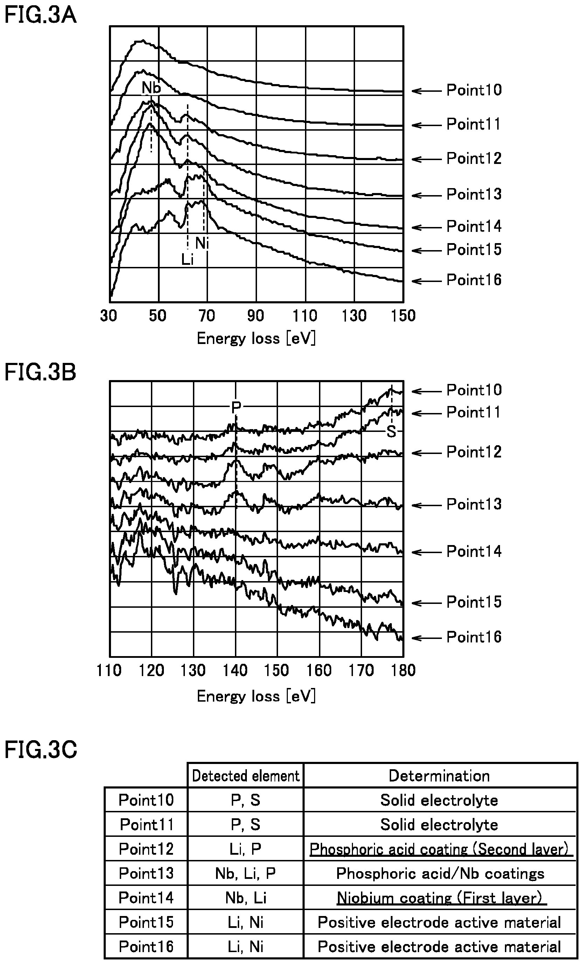

Results of the STEM-EELS measurement are shown in Figs. 3A-3C. In Fig. 3A and Fig. 3B, the numeral after "Point" indicates the number of measurement point at the time of 3-nm-step measurement across the range extending from the solid electrolyte on the outside of the coating film to the positive electrode active material particles inside the coating film.

The results in Fig. 3A and Fig. 3B indicate that a coating film having a double-layer structure was formed as shown in Fig. 3C.

(2) XPS Measurement of Composite Particles

(2-1) Measurement Example 1

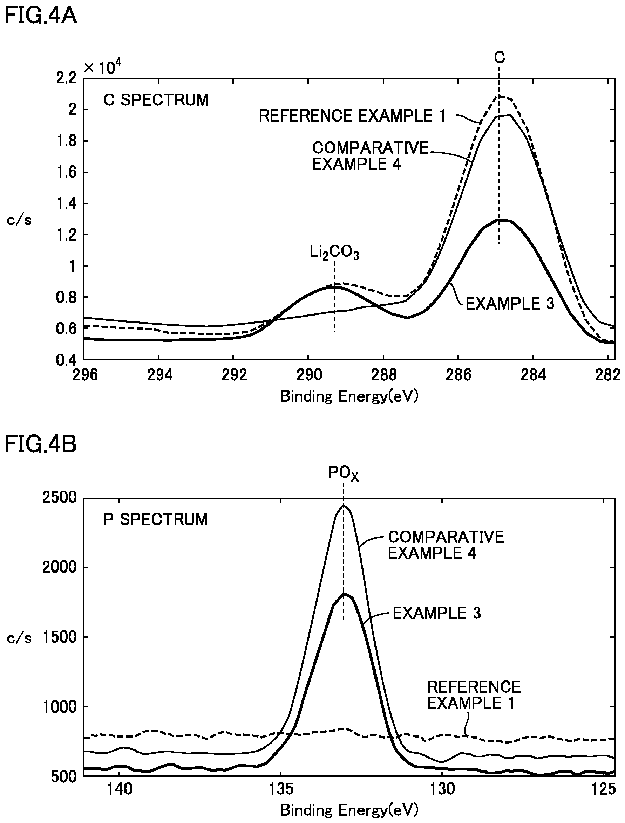

XPS measurement was carried out for the composite particles (covered positive electrode active material) of Example 1 (coating film, $Li_2Co_3/PO_x$) and of Comparative Example 4 (coating film, $PO_x$). As Reference Example 1, composite particles prepared by covering positive electrode active material particles (NCM) with a $Li_2Co_3$ monolayered coating film was also subjected to XPS measurement in the same manner. Results of the measurement are shown in Fig. 4A and Fig. 4B.

The results in Fig. 4A and Fig. 4B show peaks of $Li_2CO_3$ and $PO_x$ for the composite particles of Example 3, indicating that the coating film has a double-layer structure.

(2-2) Measurement Example 2

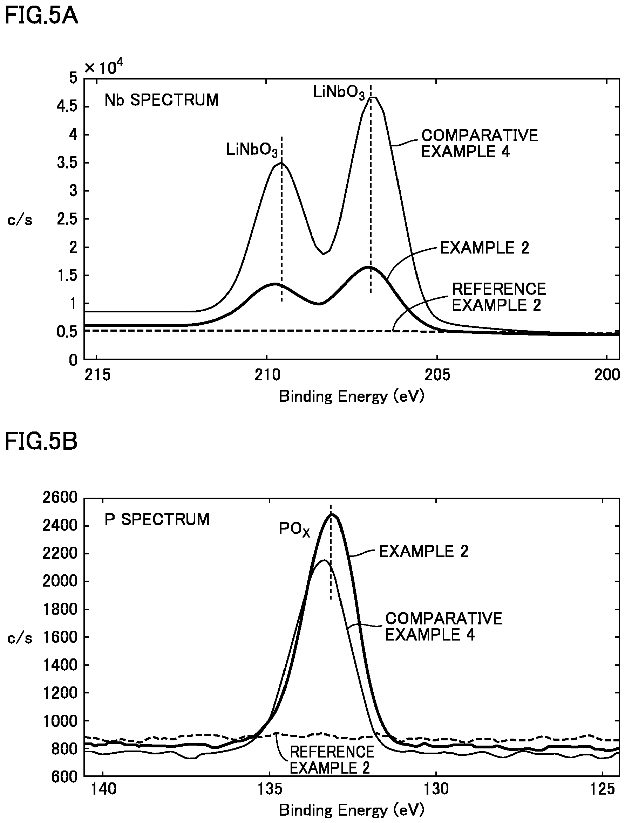

XPS measurement was carried out for the composite particles (covered positive electrode active material) of Example 2 (coating film, $LiNbO_3/PO_x$) and of Comparative Example 4 (coating film, $PO_x$). As Reference Example 2, composite particles prepared by covering positive electrode active material particles (NCM) with a Nb monolayered coating film was also subjected to XPS measurement in the same manner. Results of the measurement are shown in Fig. 5A and Fig. 5B.

The results in Fig. 5A and Fig. 5B show peaks of $LiNbO_3$ and $PO_x$ for the composite particles of Example 2, indicating that the coating film has a double-layer structure.

The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

**Claims**

1. A composite particle (100) comprising:

   a positive electrode active material particle (110); and
   a coating film (120) covering at least part of a surface of the positive electrode active material particle (110), wherein
   the coating film (120) includes a first layer (121) covering at least part of the surface of the positive electrode active material particle (110) and a second layer (122) covering at least part of a surface of the first layer (121), the first layer (121) includes an alkaline oxide including Li and M, the M is at least one of niobium and carbon, and the second layer (122) includes a phosphorus compound.

2. The composite particle (100) according to claim 1, wherein the alkaline oxide is lithium niobate or lithium carbonate.

3. The composite particle (100) according to claim 1, wherein the phosphorus compound is a phosphoric acid compound.

4. A positive electrode comprising the composite particle (100) according to any one of claims 1 to 3 and a sulfide solid electrolyte.

5. An all-solid-state battery comprising the positive electrode according to claim 4, a negative electrode, and a separator.

FIG.1

FIG.2

```
          ┌─────────────┐
          │    START    │
          └──────┬──────┘
                 │
                 ▼                    a
   ┌──────────────────────────────┐
   │ PREPARE POSITIVE ELECTRODE   │
   │ ACTIVE MATERIAL PARTICLE     │
   └──────────────┬───────────────┘
                  │
                  ▼                   b
   ┌──────────────────────────────┐
   │      FORM COATING FILM        │
   │                         b1    │
   │   ┌──────────────────┐        │
   │   │ FORM FIRST       │        │
   │   │ LAYER            │        │
   │   └──────────────────┘        │
   │                         b2    │
   │   ┌──────────────────┐        │
   │   │ FORM SECOND      │        │
   │   │ LAYER            │        │
   │   └──────────────────┘        │
   └──────────────┬───────────────┘
                  │
                  ▼                   c
   ┌──────────────────────────────┐
   │       HEAT TREATMENT          │
   └──────────────┬───────────────┘
                  │
                  ▼
          ┌─────────────┐
          │     END     │
          └─────────────┘
```

FIG.3A

Energy loss [eV]

FIG.3B

Energy loss [eV]

FIG.3C

| | Detected element | Determination |
|---|---|---|
| Point10 | P, S | Solid electrolyte |
| Point11 | P, S | Solid electrolyte |
| Point12 | Li, P | Phosphoric acid coating (Second layer) |
| Point13 | Nb, Li, P | Phosphoric acid/Nb coatings |
| Point14 | Nb, Li | Niobium coating (First layer) |
| Point15 | Li, Ni | Positive electrode active material |
| Point16 | Li, Ni | Positive electrode active material |

FIG.4A

FIG.4B

FIG.5A

FIG.5B

**EP 4 401 166 A2**

**REFERENCES CITED IN THE DESCRIPTION**

**Patent documents cited in the description**

- JP 2023002380 A
- JP 2010135090 A